# FASCICULE DE BREVET EUROPEEN

(11) **EP 1 651 506 B1**
(45) Date de publication et mention de la délivrance du brevet: **24.01.2007**
(21) Numéro de dépôt: 03750854.6
(22) Date de dépôt: 28.07.2003
(51) Int. Cl.: B62K 3/00, B62K 15/00

(54) **ENSEMBLE COMPRENANT UN RECIPIENT ET DES SOUS-ENSEMBLES DEPLOYABLES, PERMETTANT DE FORMER UN VEHICULE A ROUES, DU GENRE "TROTTINETTE"**
BEHÄLTER UND AUSFALTBARE EINHEIT ZUM AUSBILDEN EINES ROLLERARTIGEM RADFAHRZEUGS
UNIT COMPRISING A RECIPIENT AND DEPLOYABLE SUBUNITS MAKING IT POSSIBLE TO FORM A SCOOTER-TYPE WHEEL VEHICLE

(43) Date de publication de la demande: 03.05.2006
(73) Titulaire: Ghisolfi, Richard, 69100 Villeurbanne (FR); Ghisolfi, Alain, 69270 Fontaine sur Saone (FR)
(72) Inventeur: Ghisolfi, Richard, 69100 Villeurbanne (FR)
(74) Mandataire: Jeannet, Olivier
(86) Numéro de dépôt international: PCT/FR2003/002385
(87) Numéro de publication internationale: WO 2004/012984

(56) Documents cités:
- WO-A-02/45539
- DE-A- 10 026 184
- DE-U- 20 019 606
- DE-U- 20 112 214
- FR-A- 2 812 853
- US-B1- 6 273 442

## Description

La présente invention concerne un ensemble comprenant un récipient et des sous-ensembles déployables, permettant de former un véhicule à roues, du genre "trottinette", grâce auquel le déplacement du récipient est facile.

Un tel ensemble est connu, notamment par la demande de brevet français n° FR 00 10446 déposée au nom du titulaire de la présente demande.

L'ensemble selon ce document apparaît perfectible en ce qui concerne sa structure, en particulier de telle sorte que l'encombrement de l'ensemble soit aussi réduit que possible, que lesdits sous-ensembles déployables ne limitent pas de manière excessive le volume du récipient, et que le poids du contenu du récipient soit réparti de manière optimale.

L'invention a pour but de proposer un ensemble du type précité, incluant de tels perfectionnements.

Par ailleurs, il pourrait être désiré de déplacer facilement le récipient autrement que dans la configuration de véhicule à roues. Il pourrait également être désiré, dans certains cas, d'empêcher l'utilisateur de former un véhicule à roues tout en conservant une possibilité de déplacement facile du récipient. En particulier, lorsque le récipient est un cartable, il serait souhaitable qu'un écolier ou un lycéen puisse déplacer facilement son cartable sans pour autant pouvoir faire de la trottinette dans la cour de son école ou de son lycée.

L'invention a également pour but de fournir un ensemble permettant d'atteindre cet objectif dans les meilleures conditions.

L'invention a en outre pour but de fournir un ensemble ayant une structure restant légère et relativement simple à fabriquer.

Les documents WO 02/45539 et FR 2812853 décrivent des ensembles du même type que celui selon l'invention mais ne remédiant pas aux inconvénients mentionnés ci-dessus.

L'ensemble concerné comprend, de manière connue en soi,
- un premier sous-ensemble incluant un tube pivotant, une première roue à une extrémité de ce tube et une poignée en forme de guidon à l'extrémité du tube opposée à cette première roue, ce premier sous-ensemble pouvant être déployé, notamment de manière télescopique, pour former la direction du véhicule ; et
- un deuxième sous-ensemble incluant une plate-forme et une deuxième roue montée sur cette plate-forme, ce deuxième sous-ensemble pouvant être déployé pour former la plate-forme et la roue arrière du véhicule.

Selon l'invention, le récipient comprend deux parties formant un angle entre elles, de telle sorte qu'il présente, vu de profil, une forme générale en "V", l'espace délimité par ces deux parties entre elles recevant lesdits premier et deuxième sous-ensembles.

Ces deux parties du récipient permettent de former un récipient à deux compartiments, qui conserve ainsi un volume de rangement important nonobstant la place occupée par lesdits premier et deuxième sous-ensembles.

Avantageusement, des moyens sont prévus pour empêcher un utilisateur non autorisé de placer l'ensemble en configuration "véhicule". Cet utilisateur, notamment un écolier lorsque le récipient est un cartable, ne peut donc former le véhicule dans des lieux où la circulation au moyen de ce véhicule serait interdite ou non souhaitable, en particulier dans une cour de récréation.

L'ensemble comprend avantageusement des moyens permettant le montage/démontage rapide de ladite plate-forme.

Le démontage de la plate-forme permet d'empêcher un utilisateur non autorisé de placer l'ensemble en configuration "véhicule" ou autrement d'alléger ledit ensemble. Un écolier peut ainsi se rendre à son école accompagné d'un adulte en utilisant l'ensemble selon l'invention en configuration "trottinette", puis, à la porte de l'école, ladite plate-forme peut être retirée par l'adulte pour empêcher l'écolier d'utiliser la trottinette dans la cour de récréation ; le récipient (cartable) reste néanmoins aisément déplaçable au moyen de ladite poignée et desdites roulettes.

De préférence, l'ensemble comprend des moyens permettant de lier fonctionnellement le déploiement dudit deuxième sous-ensemble et le déplacement de ladite première roue en position de dépliage, de telle sorte que cette première roue soit amenée en position de dépliage lorsque ledit deuxième sous-ensemble est amené en position de dépliage, et réciproquement.

La manipulation de l'ensemble selon l'invention est ainsi facile et rapide. Selon un autre aspect de l'invention,
- le récipient comprend au moins deux roulettes coaxiales, dont chacune est située d'un côté de l'axe longitudinal du véhicule que l'ensemble permettent de former ;
- l'ensemble comprend des moyens permettant de déplacer ladite première roue entre une position de repliage, dans laquelle cette première roue est effacée et permet auxdites roulettes de venir porter contre le sol, et une position de dépliage, dans laquelle cette première roue peut venir porter contre le sol en lieu et place des roulettes, et
- ledit tube pivotant et ladite poignée en forme de guidon peuvent être déployés lorsque ladite première roue est en position de repliage.

L'ensemble selon l'invention peut ainsi être placé dans une configuration dans laquelle ladite première roue est en position de repliage et ledit tube pivotant ainsi que ladite poignée en forme de guidon sont déployés. Ce tube et cette poignée peuvent alors être saisis pour déplacer le récipient au moyen desdites roulettes, à la manière d'une valise à roulettes couramment dénommée "trolley".

Cette troisième configuration augmente les possibilités d'utilisation dudit ensemble selon l'invention : l'utilisateur peut ainsi placer cet ensemble soit en configuration "véhicule" (trottinette) soit en configuration "trolley" pour déplacer facilement le récipient.

Avantageusement, des moyens sont prévus pour caler angulairement ledit tube pivotant lorsque ladite première roue est amenée dans sa position de repliage, de telle sorte que ladite poignée en forme de guidon soit également calée angulairement.

Ce calage facilite la saisie de cette poignée.

Avantageusement, ce même calage est tel que la poignée en forme de guidon soit calée dans une position dans laquelle elle s'étend parallèlement à l'axe desdites roulettes.

Cette poignée est ainsi particulièrement ergonomique.

Un mode de réalisation préférée de l'invention est décrit ci-après en référence au dessin schématique annexé, fourni à titre d'exemple non limitatif.

Dans ce dessin,
la figure 1 est une vue en perspective de l'ensemble selon l'invention, en configuration "cartable" ;
la figure 2 en est une vue en perspective, en configuration "trollev" la figure 3 en est une vue en perspective, en configuration "trottinette" ;
la figure 4 en est une vue en coupe longitudinale, en configuration "trolley" ;
la figure 5 en est une vue en coupe longitudinale, en configuration "trottinette", et
la figure 6 en est une vue partielle, en coupe selon la ligne VI-VI de la figure 4.

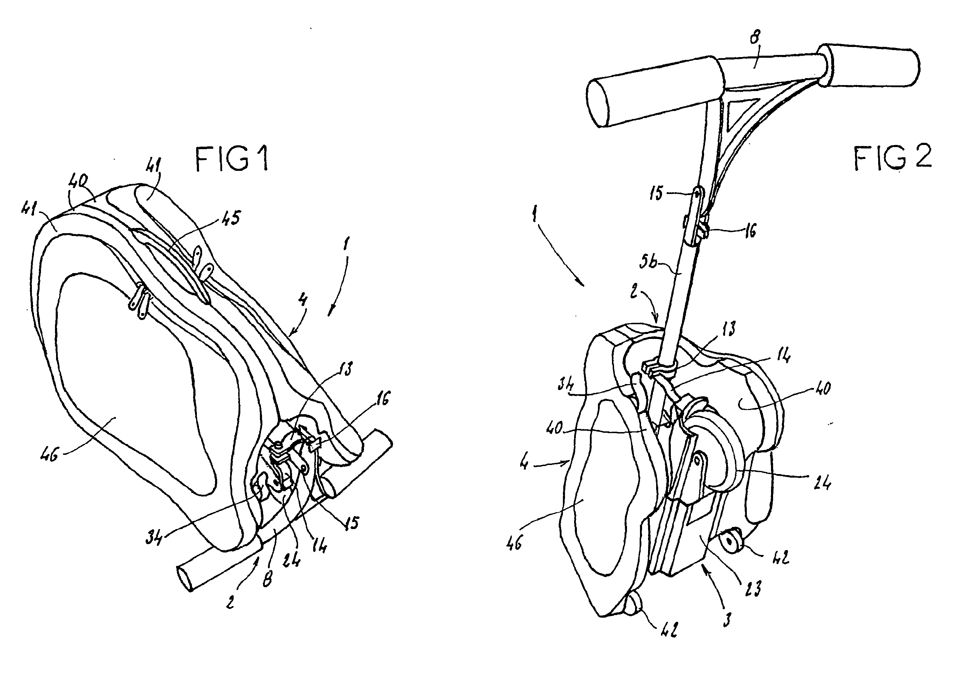

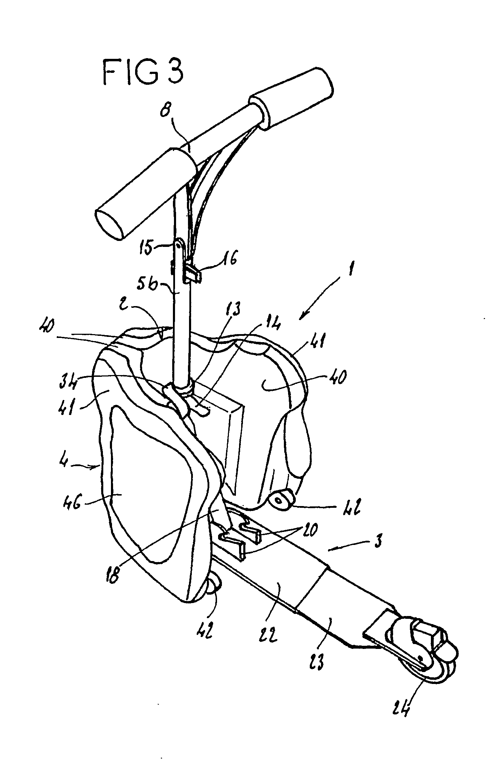

Les figures 1 à 5 représentent un ensemble 1 comprenant deux sous-ensembles déployables 2, 3 et une partie 4 formant un cartable. Cet ensemble 1 permet de former un cartable dans la configuration représentée par la figure 1, un "trolley" dans la configuration montrée par la figure 2 et une trottinette dans la configuration montrée par la figure 3.

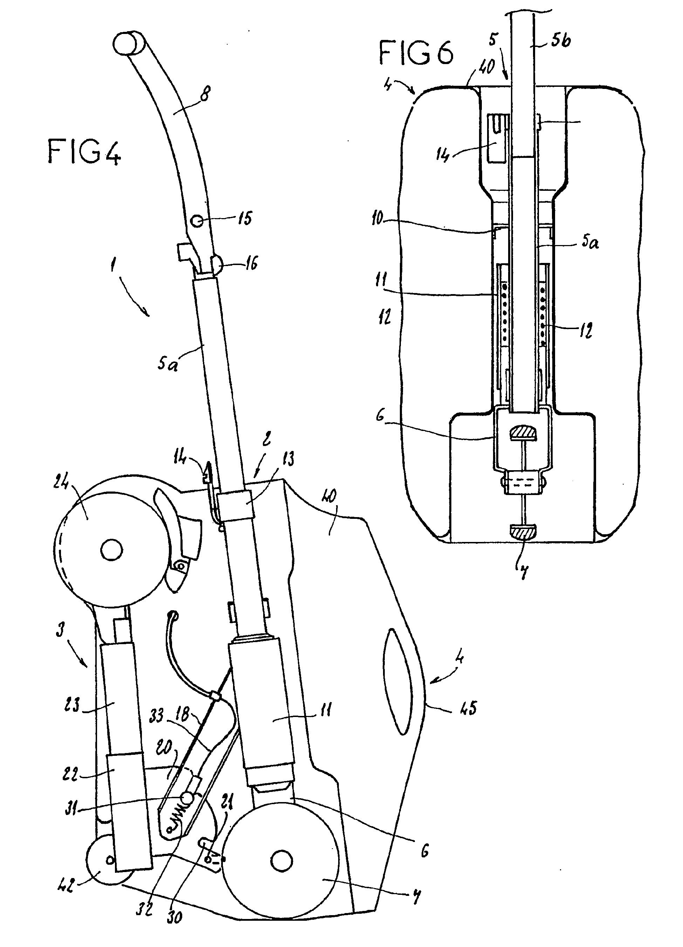

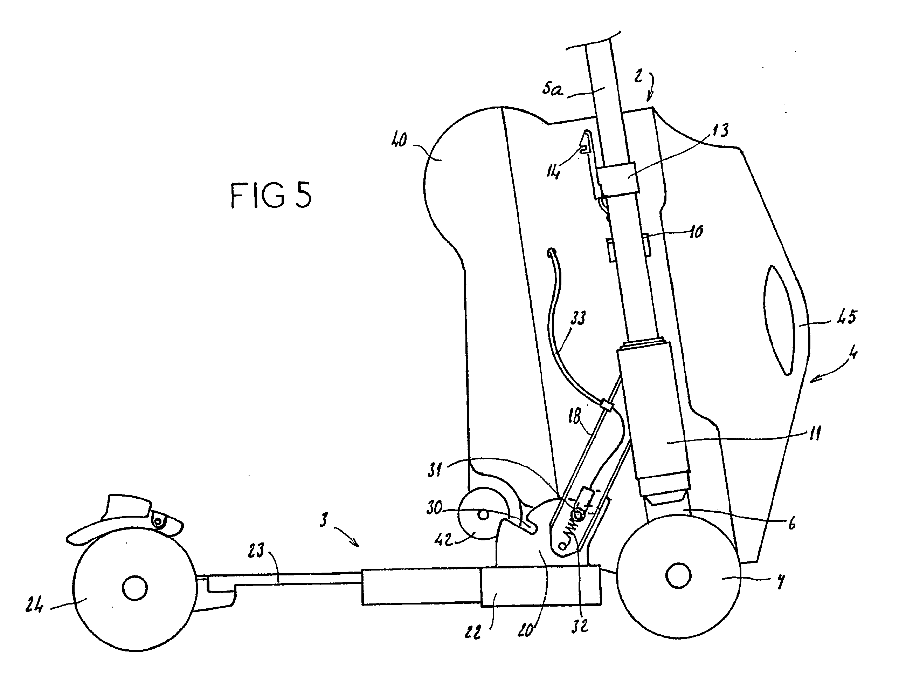

Comme le montrent plus particulièrement les figures 4 à 6, le sous-ensemble 2 comprend un tube de télescopique pivotant 5 et une fourche inférieure 6 comportant une roue 7. Du côté opposé à la roue 7, le tube 5 comporte une poignée 8 formant guidon.

Le tube 5 comprend un tube extérieur inférieur 5a et un tube intérieur supérieur 5b. Le tube 5a comprend une bague de centrage 10, prenant appui contre la partie formant cartable 4, un manchon 11 logeant un ressort 12 qui forme un amortisseur de la roue 7 et, à sa partie supérieure, un collier 13 de serrage radial du tube 5b, actionné au moyen d'un levier 14. Ce collier 13 permet le coulissement du tube 5b de rapport au tube 5a lorsqu'il est desserré, et l'immobilisation de ces deux tubes 5a, 5b l'un par rapport à l'autre, lorsqu'il est serré.

Le tube 5b comporte un pivot transversal supérieur 15 sur lequel est montée la poignée 8. Comme le montre la figure 1, ce pivot 15 permet de replier cette poignée 8 dans une position proche de la partie formant cartable 4, et, comme le montrent les figures 2 et 3, de déplier cette poignée 8 dans le prolongement du tube 5b. Un verrou 16 permet de maintenir cette poignée 8 en position de dépliage.

Le sous-ensemble 2 est déplaçable par rapport à la partie formant cartable 4 selon l'axe du tube 5, entre une position de repliage montrée sur la figure 4 et une position de dépliage montrée sur la figure 5.

Le manchon 11 est solidaire d'une poutrelle tubulaire inclinée 18 reliant fonctionnellement le sous-ensemble 2 au sous-ensemble 3, comme cela sera explicité plus loin.

Le sous-ensemble 3 comprend deux secteurs 20 montés sur la partie 4 formant cartable au moyen d'un axe transversal 21, un tube 22 solidaire de ces secteurs 20, une plate-forme 23 comprenant une roue 24 à une extrémité et pouvant être engagée dans le tube 22 par son autre extrémité, des moyens libérables de verrouillage de la plate-forme 23 dans le tube 22, et des moyens libérables de verrouillage du sous-ensemble 3 soit dans la position de repliage montrée sur la figure 4 soit dans la position de dépliage montrée sur la figure 5.

Les deux secteurs 20 comprennent deux encoches radiales 30 propres à recevoir un doigt transversal 31 faisant partie desdits moyens de verrouillage du sous-ensemble 3 dans ses positions de repliage ou de dépliage.

Les moyens de verrouillage de la plate-forme 23 dans le tube 22 sont bien connus en eux-mêmes ne seront donc pas décrits en détail. Ils incluent au moins un verrou monté sur la plate-forme 23, propre à être reçu dans au moins une gâche correspondante aménagée dans le tube 22, pour assurer le verrouillage de la plate-forme 23 dans le tube 22.

Les moyens de verrouillage du sous-ensemble 3 dans ses positions de repliage ou de dépliage comprennent, outre le doigt transversal 31 précité, un ressort 32 rappelant normalement ce doigt 31 dans le fond de l'une ou l'autre des encoches 30, un câble 33 permettant de déplacer ce doigt 31 à l'encontre de la force de ce ressort 32, pour effacer le doigt 31 au-delà des encoches 30 et permettre ainsi le pivotement des secteurs 20 autour de l'axe 21, et un ensemble 34 de commande du coulissement de ce câble 33, situé sur la partie supérieure de la pièce formant cartable 4.

Comme cela apparaît sur les figures 4 et 5, la poutrelle 18 est montée pivotante sur les secteurs 20 en un point distant de l'axe 21. Il en résulte que le mouvement du sous-ensemble 3 en position de dépliage provoque le déplacement du sous-ensemble 2 en position de dépliage, comme cela apparaît par comparaison des figures 4 et 5.

La partie 4 formant cartable comprend de deux coques 40 assemblées l'une à l'autre le long de l'un de leurs bords longitudinaux, et des parois souples 41, par exemple en toile, fixées auxdites coques 40 sur le côté extérieur de celles-ci.

Les coques 40 forment un angle entre elles, de telle sorte que la partie 4 formant cartable présente, vue de profil, une forme générale en "V'. L'espace délimité par ces coques 40 entre elles reçoit lesdits premier et deuxième sous-ensembles 2, 3.

Comme le montrent les figures 4 à 6, cet espace se subdivise en deux parties, dont une première se trouve le long du bord de jonction des coques 40 et une deuxième débouche sur l'extérieur, du côté opposé audit bord de jonction.

Ladite première partie dudit espace reçoit le sous-ensemble 2. Il apparaît sur la figure 6 qu'elle présente une portion supérieure de plus forte section, permettant l'accès au levier 14, une portion centrale de plus faible section, au niveau de laquelle se trouvent la bague 10 et le manchon 11, et une portion inférieure de plus forte section, recevant la fourche 6 et la roue 7 et permettant le pivotement de celles-ci, avec le tube 5.

Ladite portion centrale comprend une partie supérieure circulaire recevant la bague 10 et une partie inférieure carrée, de dimensions légèrement supérieures à celles de la fourche 6. Comme le montre la figure 6, cette partie inférieure carrée reçoit de manière ajustée la partie supérieure de la fourche 6 dans ladite position de repliage, ce qui assure un calage en rotation du tube 5 dans une position dans laquelle la poignée 8 s'étend parallèlement à l'axe des roues 7 et 24, comme le montre la figure 3. Dans ladite position de dépliage, la fourche 6 est placée au-delà de cette partie inférieure carrée, dans ladite portion inférieure de plus forte section, ce qui autorise le pivotement de la fourche 6, et donc du tube 5, de la poignée 8 et de la roue 7 selon l'axe du tube 5.

Ladite deuxième partie dudit espace reçoit le sous-ensemble 3. Les coques 40 forment en outre, au niveau de l'axe 21 et en arrière de celui-ci, deux embrèvements latéraux recevant des roulettes 42 d'axes parallèles à celui de la roue 24. Dans la zone médiane de leur bord de jonction, et sur leur côté extérieur, ces coques 40 forment également une poignée 45 de portage de l'ensemble 1.

Les parois souples 41 forment avec les coques 40 des compartiments de rangement. Elles comportent des fermeture à glissières qui permettent l'ouverture ou la fermeture de ces compartiments, et au moins une des parois souples 41 peut comporter au moins une poche auxiliaires 46, pouvant également être fermée par une fermeture à glissières.

En pratique, à partir de la configuration "cartable" montrée sur la figure 1, l'utilisateur peut agir sur le levier 14 de manière à libérer le dépliage du tube 5b à permettre le dépliage de la poignée 8. L'ensemble est alors dans la configuration "trolley" montrée sur les figures 2 et 4, dans laquelle il peut être facilement déplacé au moyen des roulettes 42, l'utilisateur saisissant la poignée 8. La roue 7 est effacée en deçà de la face inférieure des coques 40 et ne fait pas obstacle au roulement des roulettes 42 ni à un maintien de l'ensemble 1 dans la position dressée montrée sur les figures 2 et 4.

L'actionnement de l'ensemble 34 permet d'amener les sous-ensembles 2 et 3 en position de dépliage, et donc d'amener l'ensemble 1 en configuration "trottinette". Dans cette configuration, les coques 40 et roulettes 42 sont maintenues à distance du sol grâce aux dépliage du sous-ensemble 2.

L'utilisation de l'ensemble 1 dans cette configuration "trottinette" peut être empêchée simplement en retirant la plate-forme 23 du tube 22.

Ainsi que cela apparaît de ce qui précède, l'invention fournit un ensemble 1 pouvant être déplacé facilement autrement que dans la configuration "trottinette" et permettant en outre d'empêcher l'utilisateur de former une "trottinette" le cas échéant. Cet ensemble 1 permet également de former un cartable dont le volume de rangement n'est pas limité de manière excessive par lesdits sous-ensembles déployables 2, 3, et conserve une structure restant légère et relativement simple à fabriquer.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. - Ensemble (1) comprenant un récipient (4) et des sous-ensembles (2, 3) déployables, permettant de former un véhicule à roues, du genre "trottinette", comprenant :
- un premier sous-ensemble (2) incluant un tube pivotant (5), une première roue (7) à une extrémité de ce tube (5) et une poignée (8) en forme de guidon à l'extrémité du tube (5) opposée à cette première roue (7), ce premier sous-ensemble (2) pouvant être déployé, notamment de manière télescopique, pour former la direction du véhicule ; et
- un deuxième sous-ensemble (3) incluant une plate-forme (23) et une deuxième roue (24) montée sur cette plate-forme (23), ce deuxième sous-ensemble (3) pouvant être déployé pour former la plate-forme et la roue arrière du véhicule ;
ensemble (1) **caractérisé en ce que** le récipient (4) comprend deux parties formant un angle entre elles, de telle sorte que ce récipient (4) présente, vu de profil, une forme générale en "V', l'espace délimité par ces deux parties entre elles recevant lesdits premier et deuxième sous-ensembles (2, 3).

2. - Ensemble (1) selon la revendication 1, **caractérisé en ce qu'**il comprend des moyens (22, 23) permettant d'empêcher un utilisateur non autorisé de placer l'ensemble (1) en configuration "véhicule".

3. - Ensemble (1) selon la revendication 1 ou la revendication 2, **caractérisé en ce qu'**il comprend des moyens (22) permettant le montage/démontage rapide de ladite plate-forme (23).

4. - Ensemble (1) selon l'une des revendications 1 à 3, **caractérisé en ce qu'**il comprend des moyens (11, 12, 18) permettant de lier fonctionnellement le déploiement dudit deuxième sous-ensemble (3) et le déplacement de ladite première roue (7) en position de dépliage, de telle sorte que cette première roue (7) soit amenée en position de dépliage lorsque ledit deuxième sous-ensemble (3) est amené en position de dépliage, et réciproquement.

5. - Ensemble (1) selon l'une des revendications 1 à 3, **caractérisé en ce que** :
- le récipient (4) comprend au moins deux roulettes coaxiales (42), dont chacune est située d'un côté de l'axe longitudinal du véhicule que l'ensemble (1) permettent de former;
- l'ensemble (1) comprend des moyens (21, 20, 18, 11, 12, 5) permettant de déplacer ladite première roue (7) entre une position de repliage, dans laquelle cette première roue (7) est effacée et permet auxdites roulettes (42) de venir porter contre le sol, et une position de dépliage, dans laquelle cette première roue (7) peut venir porter contre le sol en lieu et place des roulettes (42), et
- ledit tube pivotant (5) et ladite poignée (8) en forme de guidon peuvent être déployés lorsque ladite première roue (7) est en position de repliage.

6. - Ensemble (1) selon la revendication 5, **caractérisé en ce qu'**il comprend des moyens (6, 40) pour caler angulairement ledit tube pivotant (5) lorsque ladite première roue (7) est amenée dans sa position de repliage, de telle sorte que ladite poignée (8) en forme de guidon soit également calée angulairement.

7. - Ensemble (1) selon la revendication 6, **caractérisé en ce que** ledit calage est tel que la poignée (8) en forme de guidon soit calée dans une position dans laquelle elle s'étend parallèlement à l'axe desdites roulettes (42).

## Claims

1. - Unit (1) comprising a recipient (4) and deployable subunits (2, 3), making it possible to form a scooter-type wheel with, comprising:
- a first subunit (2) comprising a swiveling tube (5), a first wheel (7) arranged on the end of this tube (5) and a handle (8) in the form of a handle bars which is mounted on the end of the tube (5) opposed to this first wheel (7), said first subunit (2) being deployable mainly in telescopic manner, in such a way that the vehicle control is embodied; and
- a second subunit (3) which is provided with a platform (23) and a second wheel (24) mounted on said platform (23), this second subunit (3) being deployable in such a way that the platform and the rear wheel of the vehicle are formed;
the unit (1) being **characterized in that** the recipient (4) comprises two parts forming an angle therebetween, in such a way that recipient (4) is generally V-shaped in a profile view, the space limited by said two parts being used for arranging the first and second subunits (2, 3) therein.

2. - Unit (1) according to claim 1, **characterized in that** it comprises means (22, 23) making it possible to prevent an unauthorized user from placing the unit (1) in the vehicle configuration.

3. - Unit (1) according to claim 1 or claim 2, **characterized in that** it comprises means (22) allowing rapid assembling/disassembling of said platform (23).

4. - Unit (1) according to any of claims 1 to 3, **characterized in that** it comprises means (11, 12, 18) making it possible to functionally link the deployment of said second subunit (3) and the displacement of said first wheel (7) in the unfolding position, so that this first wheel (7) is brought in unfolding position when said second subunit (3) is brought in unfolding position, and reciprocally.

5. - Unit (1) according to one of claims 1 to 3, **characterized in that**:
- the recipient (4) comprises at least two coaxial casters (42), each one of which being located on a side of the longitudinal axis of the vehicle which the unit (1) make it possible to form;
- the unit (1) comprises means (21, 20, 18, 11, 12, 5) making it possible to move said first wheel (7) between a retraction position, in which this first wheel (7) is unobtrusive and makes it possible to said casters (42) to bear on the ground, and a unfolding position, in which this first wheel (7) can bear on the ground instead of casters (42), and
- said swiveling tube (5) and said handlebar handle (8) can be deployed when said first wheel (7) is in retraction position.

6. - Unit (1) according to claim 5, **characterized in that** it comprises means (6, 40) to angularly immobilized said swiveling tube (5) when said first wheel (7) is brought in its retraction position, in such a way that said handle (8) is also angularly immobilized.

7. - Unit (1) according to claim 6, **characterized in that** said immobilization is such that the handle (8) is immobilized in a position in which it extends parallel to the axis of the axis of said casters (42).

## Patentansprüche

1. Einheit (1), die einen Behälter (4) und auffaltbare Untereinheiten (2, 3) aufweist, die es erlauben, ein Radfahrzeug des Typs "Tretroller" zu bilden, aufweisend:
- eine erste Untereinheit (2), die ein Schwenkrohr (5), ein erstes Rad (7) an einem Ende dieses Schwenkrohrs (5) und einen Griff (8) in Lenkerform am anderen Ende des Schwenkrohrs (5) dem ersten Rad (7) entgegengesetzt aufweist, wobei diese erste Untereinheit (2) insbesondere teleskopisch aufgefaltet werden kann, um die Lenkung des Fahrzeugs zu bilden, und
- eine zweite Untereinheit (3), die eine Plattform (23) und ein zweites Rad (23) aufweist, das auf diese Plattform (23) montiert ist, wobei diese zweite Untereinheit (3) aufgefaltet werden kann, um die Plattform und das Heckrad des Fahrzeugs zu bilden,
Einheit (1) **dadurch gekennzeichnet, dass** der Behälter (4) zwei Teile aufweist, die untereinander einen Winkel bilden, so dass dieser Behälter (4) im Profil gesehen eine allgemeine "V"-Form aufweist, wobei der Raum, der von diesen zwei Teilen untereinander abgegrenzt wird, die erste und die zweite Untereinheit (2, 3) aufnimmt.

2. Einheit (1) nach Anspruch 1, **dadurch gekennzeichnet, dass** sie Mittel (22, 23) aufweist, die es erlauben, einen nicht befugten Benutzer daran zu hindern, die Einheit (1) in "Fahrzeug"-Konfiguration zu stellen.

3. Einheit (1) nach Anspruch 1 oder Anspruch 2, **dadurch gekennzeichnet, dass** sie Mittel (22) aufweist, die das schnelle Montieren/Demontieren der Plattform (23) erlauben.

4. Einheit (1) nach einem der Ansprüche 1 bis 3, **dadurch gekennzeichnet, dass** sie Mittel (11, 12, 18) aufweist, die er erlauben, das Auffalten der zweiten Untereinheit (3) und das Bewegen des ersten Rads (7) in Auffaltposition funktional zu verbinden, so dass dieses erste Rad (7) in Auffaltposition gebracht wird, wenn die zweite Untereinheit (3) in Auffaltposition gebracht wird und umgekehrt.

5. Einheit (1) nach einem der Ansprüche 1 bis 3, **dadurch gekennzeichnet, dass**
- der Behälter (4) mindestens zwei Koaxialrollen (42) aufweist, von welchen sich jede auf einer Seite der Längsachse des Fahrzeugs, dessen Bilden die Einheit (1) erlaubt, befindet,
- die Einheit (1) Mittel (21, 20, 18, 11, 12, 5) aufweist, die es erlauben, das erste Rad (7) zwischen einer Rückfaltposition, in der dieses erste Rad (7) versenkt ist und es den Rollen (42) erlaubt, auf dem Boden zum Aufliegen zu kommen, und einer Auffaltposition, in der dieses erste Rad (7) auf dem Boden an Stelle der Rollen (42) zum Aufliegen kommt, zu bewegen und
- das Schwenkrohr (5) und der Griff (8) in Lenkerform aufgefaltet werden können, wenn das erste Rad (7) in Faltposition ist.

6. Einheit (1) nach Anspruch 5, **dadurch gekennzeichnet, dass** sie Mittel (6, 40) aufweist, um das Schwenkrohr (5) winkelig zu verkeilen, wenn das erste Rad (7) in seine Rückfaltposition gebracht wird, so dass der Griff (8) in Lenkerform ebenfalls winkelig verkeilt ist.

7. Einheit (1) nach Anspruch 6, **dadurch gekennzeichnet, dass** das Verkeilen so ist, dass der Griff (8) in Lenkerform in einer Position verkeilt ist, in der er sich parallel zu der Achse der Rollen (42) erstreckt.
